# EUROPEAN PATENT SPECIFICATION

(11) **EP 0 761 932 B1**
(45) Date of publication and mention of the grant of the patent: **27.11.2002**
(21) Application number: 95941869.0
(22) Date of filing: 25.12.1995
(51) Int. Cl.: F01L 1/14, F01L 1/18, C04B 37/02

(54) **SLIDING PART AND METHOD OF MANUFACTURING THE SAME**
GLEITTEIL UND DESSEN HERSTELLUNGSVERFAHREN
PIECE COULISSANTE ET SON PROCEDE DE FABRICATION

(30) Priority: 28.12.1994 JP 32800694
(43) Date of publication of application: 12.03.1997
(73) Proprietor: SUMITOMO ELECTRIC INDUSTRIES, LIMITED, Osaka 541 (JP)
(72) Inventor: MATSUURA, T., Itami Works of Sumitomo Elec. Ind., Itami-shi, Hyogo 664 (JP); YAMAKAWA, A., Itami Works of Sumitomo Elec. Ind., Itami-shi, Hyogo 664 (JP)
(74) Representative: Fiener, Josef
(86) International application number: JP9502660
(87) International publication number: WO96020333

(56) References cited:
- DE-A- 4 019 644
- DE-A- 4 124 095
- GB-A- 1 196 865
- JP-A- 2 055 809
- JP-A- 2 107 579
- JP-A- 4 287 807
- JP-A- 6 033 708
- JP-A- 58 055 381
- JP-A- 60 166 276
- JP-A- 61 158 876

## Description

### Technical Field

The present invention relates to a sliding component such as a valve train part, a cam follower, or a rocker arm of an automobile engine and, more particularly, to a sliding component which has a structure of a base metal and, joined thereto, a ceramic sliding member and which exhibits an effect when used in a tappet, and to a method of manufacturing the same according to the pre-characterizing features of claim 1 and 7, respectively.

### Background Art

Sliding components have been selected from the viewpoint of good abrasion resistance on the slide face and low sliding resistance. A single material having excellent properties has been employed or a composite has been prepared therefrom for practical utilization as a sliding component.

Attention has been drawn to ceramics having excellent sliding properties in recent years. Especially, examples of actual use are found in which a ceramic is joined to a metal material in a manner such that the ceramic is positioned in sliding parts where sliding conditions are severe.

For example, there is an application where a silicon nitride ceramic having good sliding properties is joined to a cam sliding portion of an engine tappet as practiced for a high-powered engine or in compliance with exhaust gas regulations.

The above sliding component is occasionally required to exhibit sliding properties at sliding zones other than the ceramic zone or on the whole body of the component, so that hardening treatment is performed for improving the sliding properties of the metal material.

Thus, the metal part is hardened by the use of the heating and cooling effected when the ceramic is joined to the metal by heating in the previous Japanese Patent Laid-Open Nos. 2-55809, 2-199073, and 4-2672, as well as in US-A-5, 253, 418 disclosing the features of the preamble of the independent claims.

However, the above hardening relying on the heat joining has encountered the problems that the heating temperature applied to the sliding part of the body is different from that employed in the conventional heat hardening treatment of steel, thereby occasionally disenabling attainment of a hardness required for the sliding performance, and that the cooling method is special, the variety of metallic material suitable therefor is limited and the cost is increased.

With respect to the above mentioned conventional problem, the present invention is directed to provide a sliding component of higher practicability and a method of manufacturing the same.

### Disclosure of the Invention

In order to achieve the above mentioned object, the present invention provides:
a sliding component according to claim 1 and
a method of manufacturing a sliding component according to claim 7.

Constituent members of the sliding component of the present invention are the steel-made main body thereof which has been heat-hardened before the heat-joining, and one or more slide faces. At least one of the slide faces is joined to the main body by means of heat-joining.

The main body of the sliding component before joining has a surface hardened by means of the heat-hardening. In addition, the temperature of the steel portion during the joining is lower than the heat-hardening temperature for that steel, so that the hardness of the steel joined is almost the same hardness as the one during the heat-hardening. Accordingly, the sliding properties of the sliding component of the present invention is significantly improved as compared with conventional materials which is hardened during the above mentioned heat-joining.

A hardness of the steel main body after the joining is 45 or higher in H_{R}C scale. With H_{R}C of lower than 45, abrasion becomes large and no durability is given, so that sufficient sliding properties cannot be obtained. The hardness of the steel body before the joining is preferably 50 or higher in H_{R}C scale because a slight reduction in hardness is caused as the heat-joining.

The material of the main body of the sliding component is steel, and the type thereof is not specifically limited as long as it exhibits 50 or higher in H_{R}C by the heat-hardening. However, carbon steels or alloy steels including additive alloying elements such as Ni, Cr, or Mo, which are widely used as machine structural steels are preferable from the viewpoints of strength, and costs for the material and working.

A junction area between the member adapted to form the slide face and the steel main body is preferably 50% or larger of an interface area therebetween. An area smaller than this increases a load applied to the junction portion as compared with the breaking load at that junction portion, increasing the possibility of the member at the slide face to be stripped off.

The member heat-joined to the main body of the sliding component to form the slide face is preferably made of a silicon nitride ceramic, and a strength and a Charpy impact value thereof at a room temperature are 130 kg/mm² or higher and 15 kJ/m² or larger, respectively.

In this event, the ceramic having the strength of 130 kg/mm² or higher makes it possible to withstand a thermal tensile stress caused inside the ceramic due to the difference in coefficient of thermal expansion between the steel and the ceramic during the heat-joining and to thereby avoid any cracks without any difficulty.

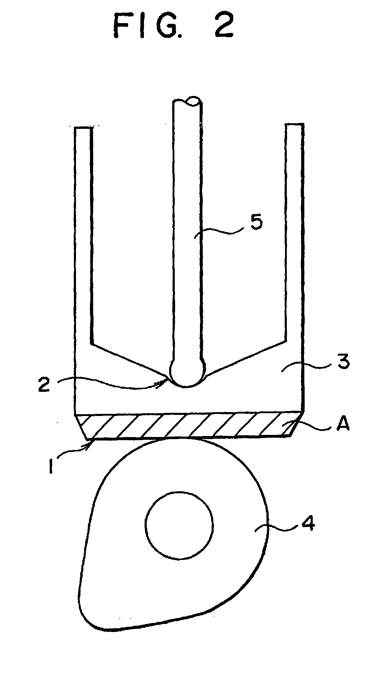

In addition, considering actual state of usage, a shock loading may act from, for example, a metal cam in a valve train system for an engine as illustrated in Fig. 2. In order to avoid damages of the ceramic thereupon, it is preferable that the Charpy impact value is 15 kJ/m² or larger.

Furthermore, it is preferable that the temperature of the steel during the joining is as lower *as* possible than the heat-hardening temperature for that steel in order to inhibit temper softening of the steel due to the heat applied during the joining. For example, for a hypo-eutectoid steel, an appropriate heating temperature during the heat-hardening is around 800°C, which is from 30° to 50°C higher than an AC3 or AC1 transformation temperature at which the steel has only an austenite phase during the heating. Accordingly, the temperature of the steel portion during the joining is preferably as lower as possible than 800°C. Any joining methods may be used if the joining temperature satisfies the above mentioned condition, and a known method may be used such as brazing and diffusion joining.

When the member to be heat-joined is ceramic, joining by means of brazing is conducted. For a brazing filler material, it is preferable to use a brazing filler material of which joining temperature is lower than the heat-hardening temperature. For example, when an Al alloy brazing filler material is used, the joining temperature is 580°C, allowing the joining at the significantly lower temperature than the heat-hardening temperature.

In addition, when a brazing filler material such as Ag-Ti or Ag-Cu-Ti whose joining temperature is higher than the heat-hardening temperature for the steel, it is preferable that the temperature of the steel portion is decreased to the lower temperature than that of the brazing filler material portion, and the joining is conducted with the temperature of the steel portion kept lower than the heat-hardening temperature.

Specifically, it is preferable to use a method of heating only the brazing filler material portion by means of, for example, high frequency heating, microwave heating, or laser heating, or a method of heating at a gradient temperature with the ceramic portion being at a high temperature and the steel portion being at a low temperature by means of, for example, electric heating or plasma heating. In addition, a brazing atmosphere is preferably a non-oxidation atmosphere (vacuum, Ar, N₂, H₂, etc.).

### Brief Description of the Drawings

Fig. 1 is a view for use in describing a tappet to which the present invention is applied.

Fig. 2 is a view for use in describing a using state for a tappet.

Fig. 3 is a view for use in describing a method of joining a sliding member to a steel-made main body

### Denotation of Symbols

- 1: Slide face
- 2: Slide face
- 3: Tappet main body
- 4: Cam
- 5: Push rod part
- A: Sliding member
- 6: Carbon-made mold for heating
- 7: Silicon nitride
- 8: Brazing filler material
- 9: Steel main body
- 10: Thermo-couple
- 11: Thermo-couple

### Best Mode for Carrying Out the Invention

The present invention is described specifically in conjunction with examples.

### Example 1

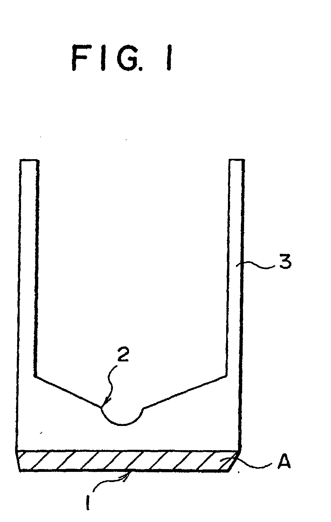

Fig. 1 shows a tappet manufactured as an example of a sliding component according to the present invention. This tappet has, as apparent from the actual state of usage illustrated in Fig. 2, significantly severe slide conditions for a slide face 1 and a push rod contact face 2. A silicon nitride sliding member A is joined thereto by means of brazing according to the present invention to form the slide face 1, and the steel of the push rod contact surface 2 keeps almost the same hardness as the one obtained during the heat hardening. It is noted that, in Fig. 2, 4 indicates a cam, 5 indicates a push rod part. The silicon nitride sliding member A was manufactured in the manner described below.

To a commercially available silicon nitride powder 5% by weight of Y₂O₃ and 2% by weight of Al₂O₃ were added as sintering aids, which was mixed in ethanol by a ball mill for 48 hours. After dried, the resultant mixed powder was pressed and subjected to CIP, and then subjected to HIP treatment for 1 hour at 1650°C in a nitrogen gas atmosphere of 2 atm.

A material of 30 mm in diameter and 1 mm in thickness was cut out of the resultant sintered body, and a flat surface to be served as a slide face was worked to have a flatness of 10 µm and a surface roughness of 0.3 µm or lower (ten point average roughness). Mechanical properties of the resultant sintered body are shown in Table 1 below.

**Table 1**

| | Mechanical Properties |
|---|---|
| Flexural Strength | 135 (kg/mm²) |
| Charpy Impact Value | 15.2(kJ/m²) |

The tappet main body 3 used was an alloy steel for machines, chromium steel SCr440 (JIS G4104). After working, it was heated to 850°C and subjected to the heat-hardening in oil. Thereafter, the sliding member A and the tappet main body 3 were brazed through an aluminum alloy brazing filler material (JIS-BA4145) of 100 µm in thickness, by using a common resistance heating furnace with a method of keeping it in vacuum at 570°C for 30 minutes.

As a comparative example, SCr440 without being subjected to the heat-hardening was used as the body 3, and joined to the sliding member A in the same manner as in the above.

The joined tappets so manufactured were measured in hardness of the slide face 2, and were incorporated into a commercially available diesel engine of OHV type, which were subjected to a durability test for 2000 hours at an engine rotation speed of 1000 rpm by using a deteriorated oil. An abrasion loss of the slide face 2 was measured.

Table 2 shows the results on the hardness of the slide face 2 before and after the joining and the abrasion loss. Provided that the determination on the abrasion loss is: "None" for a case where the abrasion loss is less than 10 µm, and "Observed" for 10 µm or more.

As indicated in Table 2, No. 1 which is an Examples with the heat-hardening shows only a slight deterioration in hardness before and after the joining, and is superior in hardness and abrasion resistance to No. 4 which is a Comparative Example without the heat-hardening.

As in No. 1, heat-hardened steel materials and brazing filler materials indicated in Nos. 2 and 3 were selected, brazing was conducted in vacuum at the respective joining temperatures, and assessment was conducted. In addition, as comparative examples, steel materials Nos. 5 and 6 without heat-hardening were used for the assessment thereof. For each case, Examples are superior in hardness and abrasion resistance.

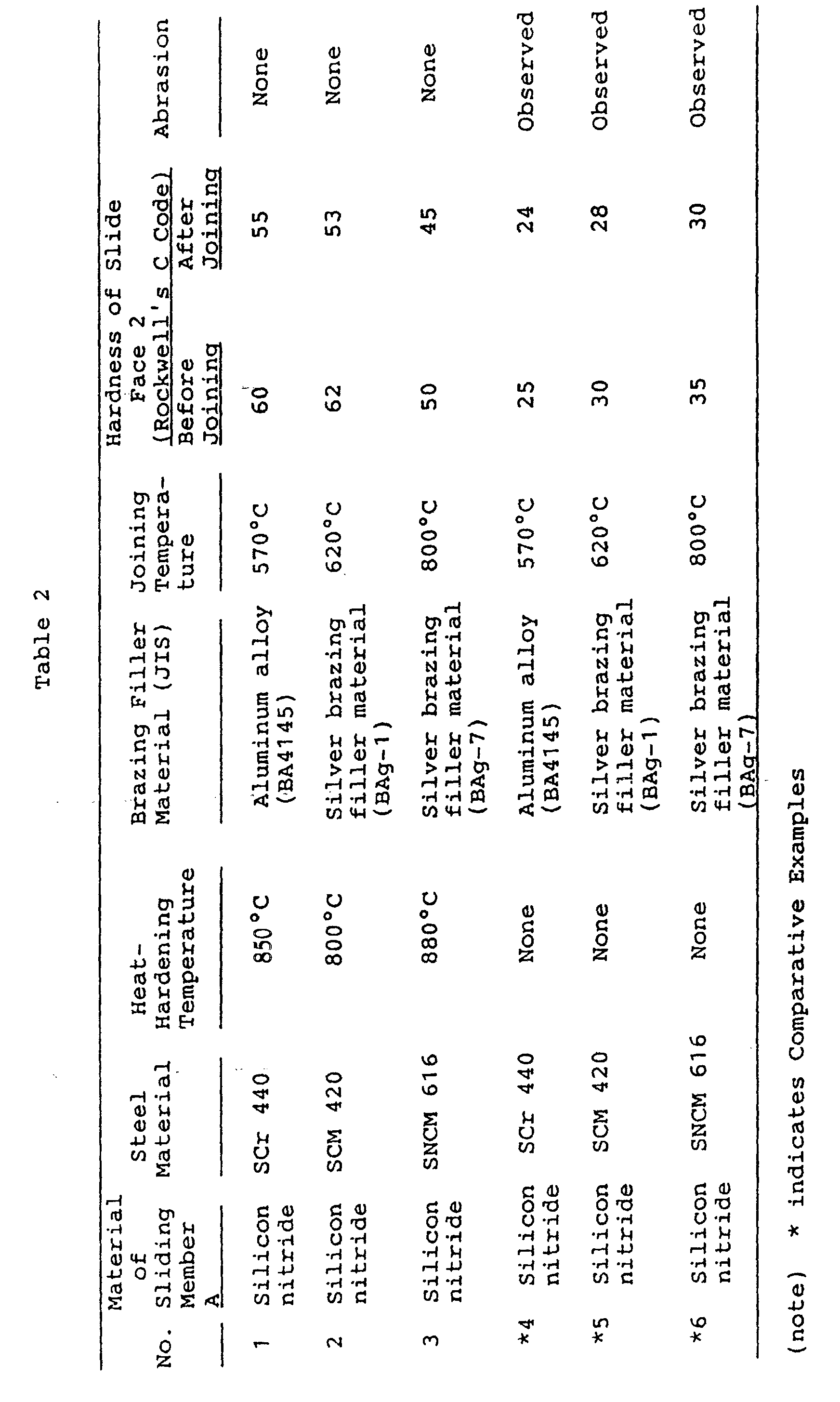

### Example 2

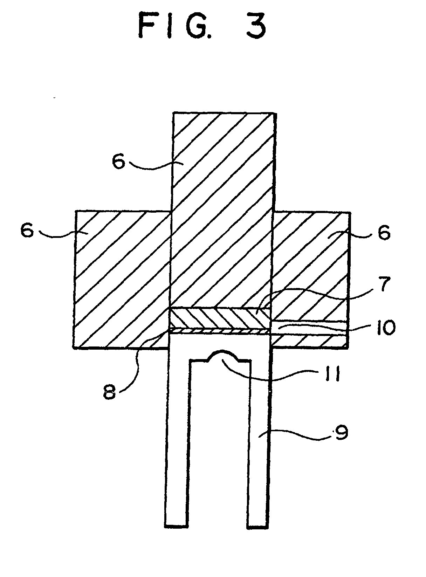

Silicon nitride similar to the one in Example 1 was used for the sliding member A. A machine structural alloy, chromium steel SCr420 (JIS G4104), was used for the tappet body 3. After working, it was heated to 800°C and subjected to the heat-hardening in oil. Thereafter, the sliding member A and the tappet body 3 were set through an aluminum alloy brazing filler material (JIS-BA4343) of 100 µm in thickness, such that the junction face is located within a carbon-made mold 6 for heating and the slide face 2 portion is exposed outside the heating carbon-made as shown in Fig. 3. This carbon-made mold 6 was placed in a furnace capable of rapid heating by means of a mechanical pressurization and a pulse current.

A pulse current of 5,000 A was applied at an ON-OFF ratio of 12:2 in a state of 10³ Torr of vacuum degree. The temperature of the junction face at a thermo-couple 10 was increased to 620°C for 3 minutes by means of discharge plasma, which was kept for 5 minutes, and then cooled to a room temperature for 5 minutes to conduct brazing. The temperature of the slide face portion at a thermo-couple 11 for No. 7 was increased to 550°C at highest.

For No. 10, the same material similar as the one in No. 7 was placed in a common resistance heating furnace, and heated to 620°C to conduct the brazing. In this case, the junction porbion and the slide face 2 were both heated to 620°C.

The hardness of the slide face 2 of the joined tappet manufactured in the manner mentioned above was assessed before and after joining. As a result, in the case of No. 7, Example, H_{R}C was decreased only from 60 to 55 before and after the joining, while in the case of No. 11,, Comparative Example, it was decreased from 60 to 48. In addition, No. 7 exhibited more favorable sliding properties.

As in No. 7, heat-hardened steel materials and brazing filler materials shown in No. 8, No. 9, and No. 10 were selected, and heated only at the junction face by means of electric heating, high frequency or laser to conduct the brazing. The temperature of the slide face at that time was lower by approximately 100°C than the temperature of the junction face. In addition, as Comparative Examples, brazing by means of common resistance heating was conducted for No. 12 and No. 13. As shown in Table 3, for each case, Examples are higher in hardness and exhibit better sliding properties for a sliding component.

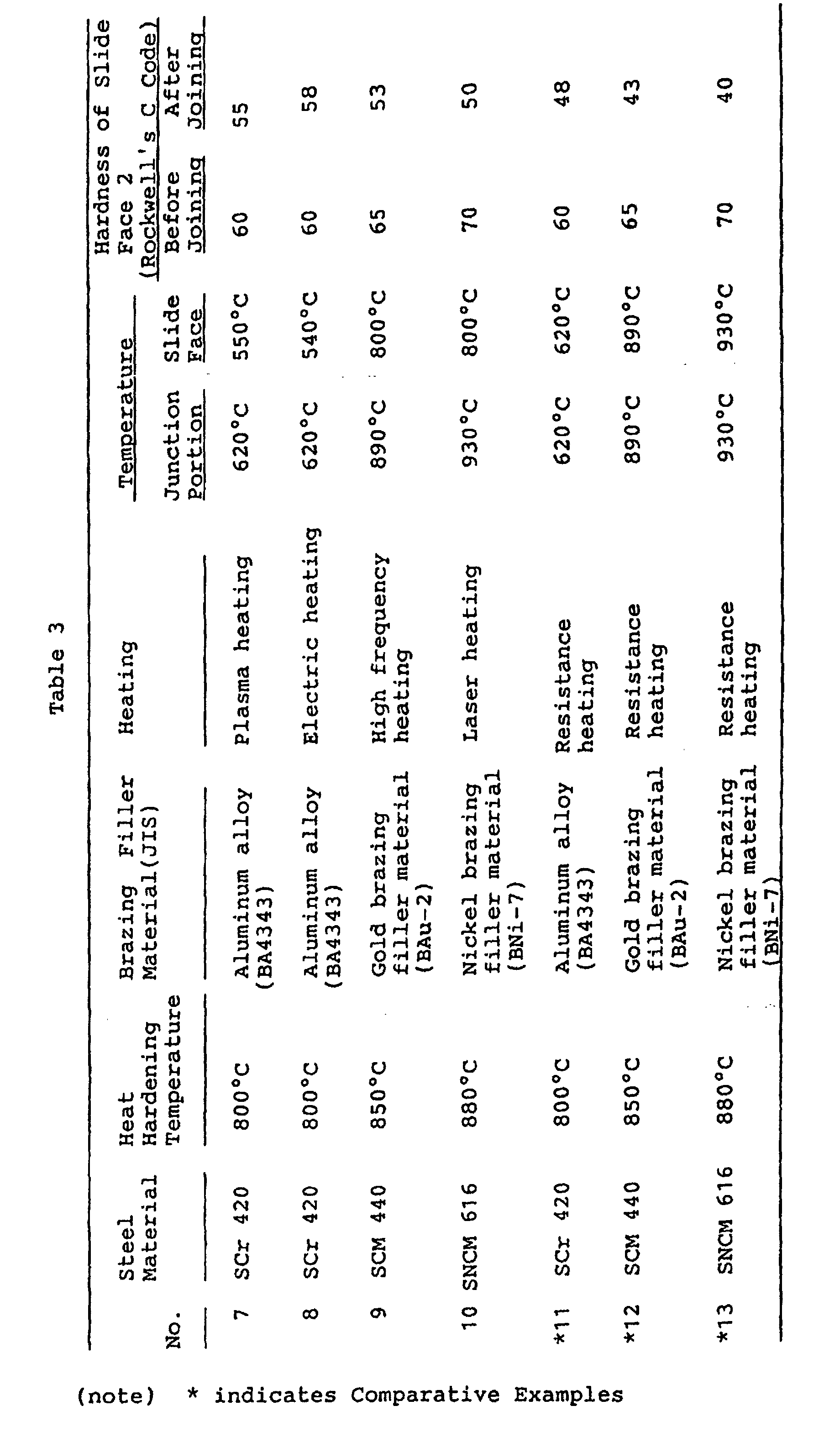

### Example 3

Ten silicon nitride sliding member A having the properties shown in Table 4 below were manufactured for each of Examples and Comparative Examples, and each was joined to SCr 440 by brazing in the same manner as in Example 1.

When the silicon nitride of Example was used, good joined bodies were obtained for all of ten samples. When the silicon nitride of Comparative Example was used, cracking occurred in five silicon nitride portions of ten joined bodies since they couldn't withstand the thermal tensile stress caused inside the ceramic due to the difference in coefficient of thermal expansion between the steel and the ceramic during the heat joining. The joined tappets manufactured (ten tappets in Example and five in Comparative Example) in which no cracking occurred in the silicon nitride were examined for their interface at the junction portion by means of transmission X ray. As a result, the joined area of the joined bodies of Example was from 75 to 100% of the junction interface area. On the other hand, it was from 30 to 48% in Comparative Example.

Next, these joined tappets (ten tappets in Example and five in Comparative Example) were each incorporated into a commercially available-diesel engine of OHV type, which were subjected to a durability test for 2000 hours at an engine rotation speed of 1000 rpm by using a deteriorated oil. As a result, ten joined bodies of Example were all good while among the five samples of Comparative Example, two samples were broken in their silicon nitride portions due to the shock loading from the metal cam, and the silicon nitride portions were peeled from the steel main bodies for the remaining three samples.

**Table 4**

| | Example | Comparative Example |
|---|---|---|
| Flexural Strength | 135(kg/mm²) | 105(kg/mm²) |
| Charpy Impact Value | 15.2(kJ/m²) | 12.8(kJ/m²) |

**Table 5**

| | Joined Area | Number of Joined Bodies Broken | |
|---|---|---|---|
| | | Upon Joining | Upon Durability Test |
| Example | 75-100% | 0/10 | 0/10 |
| Comparative Example | 30-48% | 5/10 | 5/5 (peeling occurred in three samples) |

### Industrial Applicability

As mentioned above, this invention has an effect of significantly improving the sliding properties by means of a simple manner in which a steel which has been heat-hardened before joining is used as the steel-made main body in the joined sliding component. Therefore, the present invention provides sliding components such as a valve train part, a cam follower, a rocker arm of an automobile engine and the production process thereof.

## Claims

1. A sliding component used in a valve train, a cam follower, or a rocker arm of an automobile engine, comprising a main body (3,9) made of steel and a member (A,7) adapted to form at least one slide face (1) of the slide faces and heat-joined to the main body (3,9), **characterized in that** the steel-made main body (3,9) has been heat-hardened before being heat-joined to the member (A,7) and then heat-joined to the member (A,7) while keeping the temperature of at least a slide face (2) of the main body (3,9) at a lower temperature than the heat-hardening temperature so as to avoid reduction of the hardness of at least the slide face (2) of the main body (3,9).

2. A sliding component as claimed in Claim 1, in which the steel-made main body (3,9) has been heat-hardened such that the hardness of the steel-made main body (3,9) before the heat-joining is 50 or higher in HRC.

3. A sliding component as claimed in Claim 1 or 2, in which the steel-made main body (3,9) has been hardened such that the hardness of the steel-made main body (3,9) after the heat-joining is 45 or higher in HRC.

4. A sliding component as claimed in Claim 1, 2, or 3, wherein a junction area is 50% or larger of an area of an interface between the member (A,7) adapted to form the slide face (1) and the steel-made main body (3,9).

5. A sliding component as claimed in any one of Claims 1 through 4, wherein the member (A,7) heat-joined to the main body (3,9) to form the slide face (1 ) is made of a silicon nitride ceramic, of which strength and Charpy impact value at a room temperature are 130 kg/mm² or higher and 15 kJ/ m² or larger, respectively.

6. A sliding component as claimed in any one of Claims 1 through 5, wherein the member (A,7) adapted to form the slide face (1) and the steel-made main body (3,9) are joined with an Al or Al alloy brazing filler material.

7. A method of manufacturing a sliding component used in a valve train, a cam follower, or a rocker arm of an automobile engine, comprising a main body (3,9) made of steel and a member (A,7) adapted to form at least one slide face (1) of the slide faces and heat-joined to the main body (3,9), **characterized in that** heat-joining between a heat-hardened steel-made main body (3,9) and a member (A,7) adapted to form at least one slide face (1) is conducted, while keeping the temperature of at least a slide face (2) of the main body (3,9) at a lower temperature than a heat-hardening temperature at which the steel-made main body (3,9) has been heat-hardened, so as to avoid reduction of the hardness of at least the slide face (2) of the main body (3,9).

8. A method of manufacturing a sliding component as claimed in claim 7, wherein the temperature of a junction portion during the heat-joining is higher than the temperature of the steel-made main body (3,9).

9. A method of manufacturing a sliding component as claimed in Claim 7 or 8, wherein the member (A,7) adapted to form the slide face (1) and the steel-made main body (3,9) are brazed with Al or Al alloy.

10. A method of manufacturing a sliding component as claimed in any one of Claims 7 through 9, wherein discharge plasma heating is used for the heating.

11. A method of manufacturing a sliding component as claimed in any one of Claims 7 through 9, wherein electric heating is used for the heating.

12. A method of manufacturing a sliding component as claimed in any one of Claims 7 through 9, wherein high-frequency heating is used for the heating.

13. A method of manufacturing a sliding component as claimed in any one of Claims 7 through 9, wherein laser heating is used for the heating.

## Patentansprüche

1. Gleitbauteil zur Verwendung bei einem Ventiltrieb, einem Ventilplättchen oder einem Ventilkipphebel eines Automobilmotors, umfassend einen Hauptkörper (3, 9) aus Stahl und ein Element (A, 7), das geeignet ist, wenigstens eine Gleitfläche (1) der Gleitflächen zu bilden, und durch Wärme mit dem Hauptkörper (3, 9) verbunden ist,
**dadurch gekennzeichnet, dass**
der aus Stahl gefertigte Hauptkörper (3, 9) vor der Wärmeverbindung mit dem Element (A, 7) wärmegehärtet und dann durch Wärme mit dem Element (A, 7) verbunden wurde, während die Temperatur wenigstens einer Gleitfläche (2) des Hauptkörpers (3, 9) auf einer niedrigeren Temperatur gehalten war als die Wärmehärtungstemperatur, um die Herabsetzung der Härte wenigstens der Gleitfläche (2) des Hauptkörpers (3, 9) zu vermeiden.

2. Gleitbauteil nach Anspruch 1, wobei der aus Stahl gefertigte Hauptkörper (3, 9) derart wärmegehärtet wurde, dass die Härte des aus Stahl gefertigten Hauptkörpers (3, 9) vor der Wärmeverbindung 50 HRC oder mehr beträgt.

3. Gleitbauteil nach Anspruch 1 oder 2, wobei der aus Stahl gefertigte Hauptkörper (3, 9) derart gehärtet wurde, dass die Härte des aus Stahl gefertigten Hauptkörpers (3, 9) nach der Wärmeverbindung 45 HRC oder mehr beträgt.

4. Gleitbauteil nach Anspruch 1, 2 oder 3, wobei eine Verbindungsfläche 50 % oder mehr einer Fläche einer Berührungsfläche zwischen dem zur Bildung der Gleitfläche (1) geeigneten Element (A, 7) und dem aus Stahl gefertigten Hauptkörper (3, 9) ausmacht.

5. Gleitbauteil nach einem der Ansprüche 1 bis. 4, wobei das durch Wärme mit dem Hauptkörper (3, 9) verbundene Element (A, 7) zum Bilden der Gleitfläche (1) aus einem Siliciumnitrid-Keramikwerkstoff gefertigt ist, dessen Festigkeit und Charpy-Kerbschlagmesswert bei Raumtemperatur 130 kglmm² oder höher bzw. 15 kJ/m² oder größer beträgt.

6. Gleitbauteil nach einem der Ansprüche 1 bis 5, wobei das zur Bildung der Gleitfläche (1) geeignete Element (A, 7) und der aus Stahl gefertigte Hauptkörper (3, 9) mit einer Al- oder Al-Legierungs-Lotfüllmasse zusammengefügt sind.

7. Verfahren zur Herstellung eines Gleitbauteils zur Verwendung bei einem Ventiltrieb, einem Ventilplättchen oder einem Ventilkipphebel eines Automobilmotors, umfassend einen Hauptkörper (3, 9) aus Stahl und ein Element (A, 7), das geeignet ist, wenigstens eine Gleitfläche (1) der Gleitflächen zu bilden, und durch Wärme mit dem Hauptkörper (3, 9) verbunden ist,
**dadurch gekennzeichnet, dass**
eine Wärmeverbindung zwischen einem wärmegehärteten, aus Stahl gefertigten Hauptkörper (3, 9) und einem zur Bildung wenigstens einer Gleitfläche (1) geeigneten Element (A, 7) durchgeführt wird, während die Temperatur wenigstens einer Gleitfläche (2) des Hauptkörpers (3, 9) auf einer niedrigeren Temperatur gehalten wird als eine Wärmehärtungstemperatur, bei welcher der aus Stahl gefertigte Hauptkörper (3, 9) wärmegehärtet wurde, um die Herabsetzung der Härte wenigstens der Gleitfläche (2) des Hauptkörpers (3, 9) zu vermeiden.

8. Verfahren zur Herstellung eines Gleitbauteils nach Anspruch 7, wobei die Temperatur eines Flächenkontaktabschnitts während der Wärmeverbindung höher ist als die Temperatur des aus Stahl gefertigten Hauptkörpers (3, 9).

9. Verfahren zur Herstellung eines Gleitbauteils nach Anspruch 7 oder 8, wobei das zur Bildung der Gleitfläche (1) geeignete Element (A, 7) und der aus Stahl gefertigte Hauptkörper (3, 9) mit Al oder Al-Legierung hartgelötet werden.

10. Verfahren zur Herstellung eines Gleitbauteils nach einem der Ansprüche 7 bis 9, wobei zur Erwärmung Entladungsplasma-Erwärmung eingesetzt wird.

11. Verfahren zur Herstellung eines Gleitbauteils nach einem der Ansprüche 7 bis 9, wobei zur Erwärmung elektrische Erwärmung eingesetzt wird.

12. Verfahren zur Herstellung eines Gleitbauteils nach einem der Ansprüche 7 bis 9, wobei zur Erwärmung Hochfrequenzerwärmung eingesetzt wird.

13. Verfahren zur Herstellung eines Gleitbauteils nach einem der Ansprüche 7 bis 9, wobei zur Erwärmung Lasererwärmung eingesetzt wird.

## Revendications

1. Pièce coulissante utilisée dans un train de valve, un suiveur de came, ou un bras de culbuteur d'un moteur d'automobile, comprenant un corps principal (3, 9) fait en acier et un élément (A, 7) adapté pour former au moins une face coulissante (1) des faces coulissantes et joint par procédé thermique au corps principal (3, 9), **caractérisé en ce que** le corps principal fait en acier (3, 9) a été durci par traitement thermique avant d'être joint par procédé thermique à l'élément (A, 7) et ensuite joint par procédé thermique à l'élément (A, 7) tout en conservant la température d'au moins une face coulissante (2) du corps principal (3, 9) à une température inférieure à la température de durcissement par traitement thermique de façon à éviter une diminution de la dureté d'au moins la face coulissante (2) du corps principal (3, 9).

2. Pièce coulissante selon la revendication 1, dans laquelle le corps principal fait en acier (3, 9) a été durci par traitement thermique de telle façon que la dureté du corps principal fait en acier (3, 9) soit de 50 ou plus dans l'échelle C de dureté de Rockwell avant la jonction par procédé thermique.

3. Pièce coulissante selon la revendication 1 ou 2, dans laquelle le corps principal fait en acier (3, 9) a été durci de telle façon que la dureté du corps principal fait en acier (3, 9) soit de 45 ou plus dans l'échelle C de dureté de Rockwell après la jonction par procédé thermique.

4. Pièce coulissante selon la revendication 1, 2 ou 3, dans laquelle une surface de jonction est de 50 % ou plus d'une surface d'une interface entre l'élément (A, 7) adaptée pour former la face coulissante (1) et le corps principal fait en acier (3, 9).

5. Pièce coulissante selon l'une quelconque des revendications 1 à 4, dans laquelle l'élément (A, 7) joint par procédé thermique au corps principal (3, 9) pour former la face coulissante (1) est fait en une céramique du type nitrure de silicium dont la résistance et la valeur de résilience de Charpy à une température ambiante sont de 130 kg/mm² ou plus et de 15 kJ/m² ou plus, respectivement.

6. Pièce coulissante selon l'une quelconque des revendications 1 à 5, dans laquelle l'élément (A, 7) adapté pour former la face coulissante (1) et le corps principal fait en acier (3,9) sont joints avec un matériau d'apport de brasage qui est l'Al ou un alliage d'Al.

7. Procédé de fabrication d'une pièce coulissante utilisée dans un train de valve, un suiveur de came, ou un bras de culbuteur d'un moteur d'automobile, comprenant un corps principal (3, 9) fait en acier et un élément (A, 7) adapté pour former au moins une face coulissante (1) des faces coulissantes et joint par procédé thermique au corps principal (3, 9), **caractérisé en ce que** la jonction par procédé thermique entre un corps principal (3, 9) fait en acier durci par traitement thermique et un élément (A, 7) adapté pour former au moins une face coulissante (1) est effectuée en conservant la température d'au moins une face coulissante (2) du corps principal (3, 9) à une température inférieure à une température de durcissement par traitement thermique à laquelle le corps principal (3, 9) fait en acier a été durci par traitement thermique afin d'éviter une diminution de la dureté d'au moins la face coulissante (2) du corps principal (3, 9).

8. Procédé de fabrication d'une pièce coulissante selon la revendication 7, dans lequel la température d'une partie de jonction pendant la jonction par procédé thermique est plus élevée que la température du corps principal (3, 9) fait en acier.

9. Procédé de fabrication d'une pièce coulissante selon la revendication 7 ou 8, dans lequel l'élément (A, 7) adapté pour former la face coulissante (1) et le corps principal (3, 9) fait en acier sont brasés avec de l'Al ou un alliage d'Al.

10. Procédé de fabrication d'une pièce coulissante selon l'une quelconque des revendications 7 à 9, dans lequel un chauffage par décharge de plasma est utilisé pour le chauffage.

11. Procédé de fabrication d'une pièce coulissante selon l'une quelconque des revendications 7 à 9, dans lequel un chauffage électrique est utilisé pour le chauffage.

12. Procédé de fabrication d'une pièce coulissante selon l'une quelconque des revendications 7 à 9, dans lequel un chauffage par haute fréquence est utilisé pour le chauffage.

13. Procédé de fabrication d'une pièce coulissante selon l'une quelconque des revendications 7 à 9, dans lequel un chauffage par laser est utilisé pour le chauffage.
